# NEUE EUROPÄISCHE PATENTSCHRIFT

(11) **EP 1 126 248 B2**
(45) Veröffentlichungstag und Bekanntmachung des Hinweises auf die Entscheidung über den Einspruch: **17.10.2012**
(45) Hinweis auf die Patenterteilung: 22.08.2007
(21) Anmeldenummer: 01103290.1
(22) Anmeldetag: 13.02.2001
(51) Int. Cl.: G01D 18/00

(54) **Positionsmesseinrichtung und Verfahren zu deren Betrieb**
Position measuring device as well as method for operating the same
Dispositif pour déterminer la position ainsi que la procédure de son opération

(30) Priorität: 17.02.2000 DE 10007225; 09.11.2000 DE 10055488
(43) Veröffentlichungstag der Anmeldung: 22.08.2001
(73) Patentinhaber: Dr. Johannes Heidenhain GmbH, 83292 Traunreut (DE)
(72) Erfinder: Strasser, Erich, 83308 Trostberg (DE)

(56) Entgegenhaltungen:
- EP-A- 0 836 080
- EP-A- 0 849 566
- EP-A1- 0 660 209
- DE-A1- 19 751 853
- DE-A1- 19 836 003
- DE-C1- 4 220 502
- US-A- 4 360 730
- US-A- 5 302 944
- PATENT ABSTRACTS OF JAPAN vol. 014, no. 191 (P-1038), 18. April 1990 (1990-04-18) -& JP 02 036313 A (FANUC LTD), 6. Februar 1990 (1990-02-06)
- 'F+M Feinwerktechnik+Messtechnik', 1994, CARL HANSER VERLAG Seiten 559 - 564

## Beschreibung

Die vorliegende Erfindung betrifft ein Verfahren zum Betrieb einer Positionsmesseinrichtung.

Bekannte Positionsmesseinrichtungen umfassen üblicherweise eine Messteilung in einer Messteilungsebene sowie eine relativ hierzu bewegliche Abtasteinheit. Seitens der Abtasteinheit sind in einer Abtastebene die Abtastelemente angeordnet, über die - abhängig vom physikalischen Abtastprinzip - positionsabhängige Ausgangssignale erzeugt werden. Der Abstand zwischen der Messteilungsebene und der Abtastebene sei nachfolgend als Abtastabstand bezeichnet. Die Relativbewegung zwischen den erwähnten Ebenen bzw. der Messteilung und der Abtasteinheit kann hierbei sowohl linear wie auch rotatorisch erfolgen.

Als Beispiele für derartige Positionsmesseinrichtungen seien etwa bekannte photoelektrische oder aber induktive, inkrementale Positionsmesseinrichtungen erwähnt, wie sie in numerisch gesteuerten Werkzeugmaschinen eingesetzt werden. Bei photoelektrischen Positionsmesssystemen sind in der Abtastebene üblicherweise verschiedene optoelektronische Bauelemente angeordnet, die zur Erzeugung der verschiebungsabhängig modulierten Ausgangssignale dienen; hierzu zählt die verwendete Lichtquelle ebenso wie geeignete Photodetektoren. Im Fall induktiver Positionsmesseinrichtungen sind in der Abtastebene beispielsweise planare Sende- und/oder Empfangsspulen angeordnet. Im Zusammenhang mit induktiven Positionsmesseinrichtungen sei etwa auf die DE 197 51 853 A1 der Anmelderin verwiesen.

Eine wichtige Größe bei derartigen Positionsmesseinrichtungen stellt der jeweilige Abtastabstand dar, der bei der Montage möglichst präzise eingestellt werden muss. Dies ist erforderlich, um hinreichend große Signalamplituden der im Messbetrieb erzeugten Ausgangssignale zu gewährleisten. Eine möglichst präzise Einstellung des Abtastabstandes bei der Montage ist insbesondere bei Systemen erforderlich, die nicht herstellerseitig bereits fertig montiert werden, sondern bei denen erst kundenseitig die Montage erfolgt. Üblicherweise bezeichnet man derartige Positionsmesseinrichtungen im Fall von Linear-Systemen als offene Messsysteme; im Fall rotatorischer Systeme spricht man von Einbau-Drehgebern.

Zur Einstellung eines möglichst optimalen Abtastabstandes wurden bereits eine Vielzahl mechanischer Justagehilfen vorgeschlagen. Nachteilig an den verschiedenen Justagehilfen ist anzuführen, dass diese jeweils lediglich für bestimmte Konstruktionen einer derartigen Positonsmesseinrichtung geeignet sind und demnach nicht universell eingesetzt werden können.

Aus der US 5,302,944 ist eine optische Positionsmesseinrichtung bekannt, die eine Möglichkeit umfasst, einen vorliegenden Ausfall derselbigen zu erkennen oder vorherzusehen. Insbesondere lässt sich als Ausfallursache etwa eine Verschmutzung der abgetasteten Maßverkörperung zuverlässig erfassen. Hierzu wird ein Fehlersignal erzeugt, das aus der Lichtquellenregelung abgeleitet wird, die im Normalbetrieb eine konstante Signalamplitude der sinus- und cosinusförmigen Positionssignale sichergestellt. Durch Vergleich des Fehlersignals bzw. dessen zeitlichen Verlaufs mit geeigneten Schwellwerten lassen sich ein akuter oder bevorstehender Ausfall der Positionsmesseinrichtung identifiezieren und unterscheiden.

Aufgabe der vorliegenden Erfindung ist es, ein möglichst universell einsetzbares Verfahren zum Betrieb einer Positionsmesseinrichtung anzugeben, das eine präzise Einstellung eines optimalen Funktionszustandes der Positionsmesseinrichtung gestatten.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den abhängigen Ansprüchen aufgeführt sind.

Das erfindungsgemäße Verfahren bietet im Vergleich zu bisherigen Lösungen eine Reihe von Vorteilen.

So ist das erfindungsgemäße Verfahren nunmehr nicht mehr an spezielle mechanische Konstruktionen der jeweiligen Positionsmesseinrichtung gebunden, sondern universell bei verschiedensten Typen derartiger Positionsmesseinrichtungen einsetzbar.

Dem Anwender wird im Fall von Anbauverhältnissen, die z.B. eine visuelle Überprüfung des eingestellten Abtastabstandes nicht erlauben, über das erfindungsgemäße Verfahren eine zuverlässige Information bezüglich des aktuell eingestellten Abtastabstandes dargeboten. Er muss dann über entsprechende Justage-Elemente lediglich noch den vom Hersteller vorgegebenen Abtastabstand definiert einstellen.

Insbesondere vorteilhaft erweist sich das erfindungsgemäße Verfahren, wenn in der jeweiligen Positionsmesseinrichtung bereits eine Regelungseinrichtung zum Regeln der Ausgangssignale auf gleichbleibende Signalamplituden vorgesehen ist. Zum Anzeigen des jeweils aktuellen Abtastabstandes bei der Montage muss dann lediglich der von der Regelungseinrichtung laufend bestimmte Stellgrößen-Betrag weiterverarbeitet und zur Übertragung als digitales Signal aufbereitet werden. Alternativ ist es auch möglich, den jeweils aktuellen Stellgrößen-Betrag unmittelbar als digitales Signal zu übertragen und anzuzeigen; die Umsetzung in den zugehörigen Abtastabstand wird dann vom jeweiligen Anwender vorgenommen, beispielsweise mittels eine geeigneten Kalibrierungskurve.

Das erfindungsgemäße Verfahren ist ferner sowohl bei linearen als auch bei rotatorischen Positionsmesseinrichtungen einsetzbar. Ebenso kann das erfindungsgemäße Verfahren in Verbindung mit Positionsmesseinrichtungen realisiert werden, die auf unterschiedlichen physikalischen Abtastprinzipien basieren.

Weitere Vorteile sowie Einzelheiten der vorliegenden Erfindung ergeben sich aus der nachfolgenden Beschreibung eines Ausführungsbeispieles anhand der beiliegenden Figur. Diese zeigt ein schematisches Blockschaltbild einer Positionsmesseinrichtung.

Mit dem Bezugszeichen 10 sei in der Figur die Positionsmesseinrichtung bezeichnet, von der lediglich Komponenten schematisch dargestellt sind, deren Funktion für die Erläuterung der vorliegenden Erfindung von Bedeutung ist. Anhand des dargestellten Beispiels wird eine induktive rotatorische Positionsmesseinrichtung 10 beschrieben; selbstverständlich ist die vorliegende Erfindung aber auch im Zusammenhang mit linearen Positionsmesseinrichtungen ebenso einsetzbar wie in Positionsmesseinrichtungen, die auf anderen physikalischen Abtastprinzipien beruhen.

Die Positionsmesseinrichtung 10 wird zur Bestimmung der Relativposition zweier zueinander rotierender Teile eingesetzt, beispielsweise zur Bestimmung der Position einer rotierenden Welle 60 eines - nicht dargestellten - Motors.

Die Positionsmesseinrichtung 10 umfasst eine Messteilung 12, die auf einem Teilungsträger 11 angeordnet ist, der wiederum mit der Welle 60 verbunden und um die Achse 50 drehbar ist. Durch die Lage der rotierenden Messteilung 12 im Raum wird eine Messteilungsebene definiert. Im Abtastabstand D gegenüber der Messteilung 12 bzw. der Messteilungsebene ist stationär eine Abtasteinheit 17 angeordnet. Diese umfasst u.a. ein oder mehrere Erreger-Elemente 18 sowie Abtastelemente 14, die bei der Abtastung der rotierenden Messteilung 12 positionsabhängige Ausgangssignale A, B erzeugen. Im vorliegenden Fall wird ein Paar um 90° phasenversetzter Inkrementalsignale als Ausgangssignale A, B erzeugt, die von einer Folgeelektronik 20 weiterverarbeitet werden. Bei der Folgeelektronik 20 kann es sich z.B. um eine numerische Werkzeugmaschinensteuerung handeln.

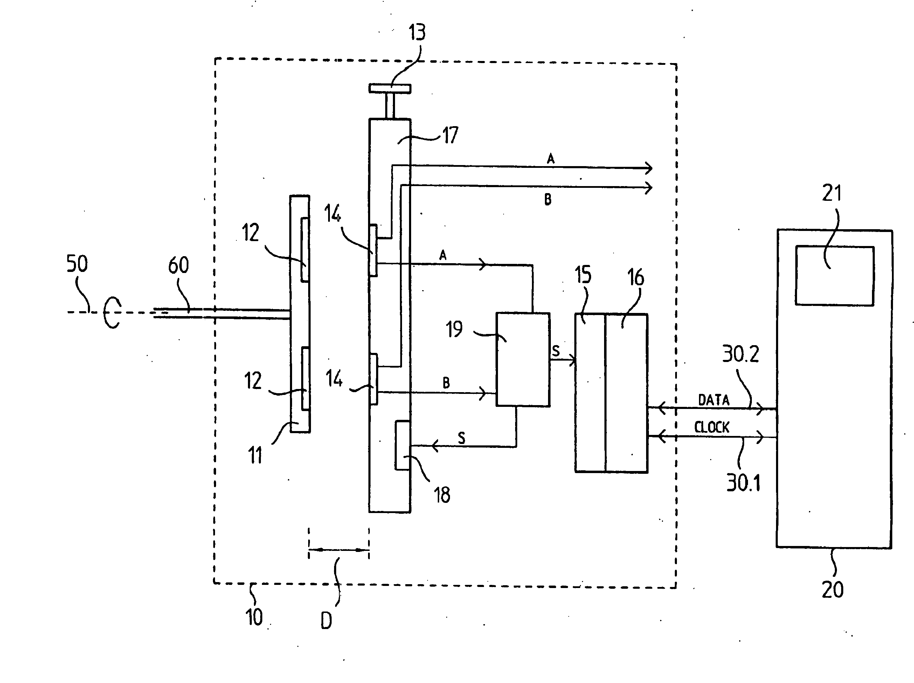

In der Darstellung der Figur 1 ist im Zusammenhang mit der Übertragung der über die Positionsmesseinrichtung 10 erzeugten Signale A, B an die Folgeelektronik 20 eine synchron-serielle Übertragungsmöglichkeit über eine entsprechende Schnittstelle und die zwei Signalübertragungsleitungen in Form einer Datenleitung 30.2 und einer Taktleitung 30.1 angedeutet. Grundsätzlich kann parallel hierzu aber auch eine Übertragung der erzeugten analogen Ausgangssignale A, B der Positionsmesseinrichtung 10 an die Folgelektronik 20 vorgesehen sein. Ebenso kann selbstverständlich auch eine asynchrone Datenübertragung zwischen der Positionsmesseinrichtung 10 und der Folgeelektronik 20 eingesetzt werden usw..

Die verwendete Messteilung 12 besteht in der Positionsmesseinrichtung 10 aus einer periodischen Abfolge von Teilbereichen unterschiedlicher elektrischer Leitfähigkeit. Die in der Figur ebenfalls lediglich schematisch angedeuteten Erregerelemente 18 sind als planare Erregerspulen ausgebildet, die Abtastelemente 14 sind als planare Sensorspulen ausgebildet.

Im Zusammenhang mit der konkreten Ausbildung der Messteilung 12 und der Abtasteinheit 17 einer derartigen induktiven Positionsmesseinrichtung 10 sei an dieser Stelle ergänzend auf die DE 197 51 853 A1 der Anmelderin verwiesen. Grundsätzlich ist vorliegende Erfindung aber wie bereits angedeutet weder auf die dort offenbarte Ausführungsform einer induktiven Positionsmesseinrichtung noch auf dieses physikalische Abtastprinzip beschränkt. So könnte etwa auch eine optische bzw. photoelektrische Positionsmesseinrichtung im Rahmen dieser Erfindung eingesetzt werden. Die Messteilung 12 wäre dann z.B. als übliche Auflicht-Messteilung mit Teilbereichen unterschiedlicher Reflektivität ausgebildet, eine Lichtquelle fungiert als Erreger-Element, als Abtastelemente wären bekannte optoelektronische Detektorelemente vorzusehen usw..

Die Positionsmesseinrichtung 10 umfasst desweiteren ein oder mehrere Justage-Elemente zur Einstellung des Abtastabstandes D, von denen in der Figur eines mit dem Bezugszeichen 13 schematisch angedeutet sei. Entsprechende Justage-Elemente 13 können in vielfältigster Form ausgebildet sein; in diesem Zusammenhang sei etwa auf die Patentanmeldung DE 198 36 003 der Anmelderin verwiesen, die eine geeignete Justage-Variante bzw. ein zur Justage geeignetes Positioniermittel offenbart.

Auf Seiten der Positionsmesseinrichtung 10 ist ferner eine Regelungseinrichtung 19 angeordnet, der die Ausgangssignale A, B der Abtastelemente 14 zugeführt werden. Außerdem umfasst die Positionsmesseinrichtung eine Umsetzeinrichtung 15 sowie eine Übertragungseinrichtung 16, die wie bereits angedeutet als synchron-serielle Schnittstelle ausgebildet ist. Der Datentransfer zwischen der Positionsmesseinrichtung 10 und der Folgeelektronik 20 erfolgt über die Übertragungseinrichtung 16 und die Datenleitung 30.2 sowie die Taktleitung 30.1. Zur Funktion der einzelnen Komponenten sei auf die nachfolgende Beschreibung verwiesen.

Im Zusammenhang mit einer geeigneten Übertragungseinrichtung bzw. einer geeigneten seriellen Schnittstelle wird an dieser Stelle beispielsweise auf die von der Anmelderin unter der Bezeichnung EnDAT vertriebene Schnittstelle oder aber auf die EP 0 660 209 A1 verwiesen.

Mit Hilfe der schematischen Darstellung in der Figur sei nachfolgend das erfindungsgemäße Verfahren näher erläutert. Die mit dem Bezugszeichen 19 gekennzeichnete Regelungseinrichtung dient zum Regeln der Signalamplituden der Ausgangssignale A, B auf gleichbleibende Signalamplituden. Konstante Signalamplituden der analogen, sinus- bzw. cosinusförmigen Ausgangssignale A, B sind insbesondere bei der Weiterverarbeitung zur Vermeidung von Fehlmessungen erforderlich; andernfalls ergeben sich etwa bei einer weiteren Signalunterteilung bzw. Signalinterpolation der Ausgangssignale A, B mögliche Fehler in der Positionsbestimmung. Verschiedene Ursachen können in derartigen Positionsmesseinrichtung jedoch zu schwankenden Signalamplituden im Messbetrieb führen. So resultieren etwa in magnetischen oder induktiven Positionsmesseinrichtungen bei ggf. variierendem Abtastabstand D unerwünscht schwankende Signalamplituden; bei optischen Positionsmesseinrichtungen kann hingegen die Verschmutzung der Messteilung zu einem unerwünschten Einbruch der Signalamplitude führen.

Regelungseinrichtungen 19 zum Regeln der Ausgangssignale A, B auf gleichbleibende Signalamplituden sind grundsätzlich für die verschiedensten Positionsmesseinrichtungen bekannt. Üblicherweise wird in entsprechenden Regelungseinrichtungen 19 die jeweilige Signalamplitude als Ist-Wert ermittelt, mit einem vorgegegeben Amplituden-Sollwert verglichen und auf Grundlage des Vergleiches ein Stellgrößen-Betrag bestimmt, der erforderlich ist, um den Ist-Wert der Signalamplitude wieder auf den Amplituden-Sollwert einzuregeln. Bekannt sind in diesem Zusammenhang Regelungseinrichtungen, bei denen aus zwei den phasenversetzten Signalen A = A₀ *sin xt, B = B₀ * cos xt der Positionsmesseinrichtung 10 durch eine geeignete Beschaltung die Größe R² = A² + B² gebildet und die Größe R² als aktuelles Maß für die Signalamplitude und damit als Ist-Wert für die Regelung verwendet wird.

Je nach dem Abtastprinzip der Positionsmesseinrichtung 10 wird über die Regelungseinrichtung 19 auf unterschiedliche Stellgrößen eingewirkt, um die Signalamplitude regelungsmäßig zu beeinflussen. Im vorliegenden Fall einer induktiven Positionsmesseinrichtung 10 kann als Stellgröße S von der Regeleinrichtung 19 die Bestromung der Sendespulen gezielt variiert werden, was in der Figur durch die Verbindung zwischen der Regelungseinrichtung 19 und den Erregerelementen 18 bzw. den Sendespulen veranschaulicht ist. Alternativ wäre es auch möglich, als Stellgröße die Verstärkung eines Verstärker-Elementes gezielt zu verändern, das die analogen Ausgangssignale A, B verstärkt, die über die Abtasteinheit erzeugt werden.
Bei optischen Positionsmesseinrichtungen würde analog hierzu als Stellgröße S die Leuchtstärke einer Lichtquelle, d.h. der Lichtquellenstrom entsprechend variiert etc..

In der vorliegenden Erfindung wird die Stellgröße S, die zur Regelung der Ausgangssignale A, B auf gleichbleibende Signalamplituden benötigt wird, nunmehr noch zusätzlich zur Einstellung des Abtastabstandes D genutzt. Der zusätzlichen Nutzung der Stellgröße S zu diesem Zweck liegt dabei die Erkenntniss zugrunde, dass die jeweilige Größe des Stellgrößen-Betrages ein unmittelbares Maß für den aktuellen Abtastabstand D darstellt. Der Abtastabstand D und der Stellgrößen-Betrag weisen üblicherweise einen bestimmten funktionalen Zusammenhang zueinander auf. So ergibt sich im Fall eines großen Abtastabstandes D und relativ kleinen Signalamplituden ein großer Betrag der Stellgröße S, der zur Nachregelung auf konstante Signalamplituden regelungsseitig erforderlich ist. Liegt hingegen ein kleiner Abtastabstand D vor, ergibt sich eine entsprechend kleinerer, erforderlicher Stellgrößen-Betrag für die Regelung der Signalamplituden usw.. Je nach dem Typ der vorliegenden Positionsmesseinrichtung kann ein anderer funktionaler Zusammenhang zwischen dem Stellgrößen-Betrag und dem Abtastabstand D vorliegen.

Der für die Regelung notwendige Stellgrößen-Betrag wird daher erfindungsgemäß laufend erfasst und in ein zur seriellen Übertragung geeignetes digitales Signal umgesetzt bzw. umgewandelt. In einer ersten Variante der vorliegenden Erfindung wird bei dieser Umsetzung der jeweilige Stellgrößenbetrag in ein digitales Signal umgesetzt, welches dem Abtastabstand D entspricht. Zu diesem Zweck muss für die jeweilige Positionsmesseinrichtung der funktionale Zusammenhang zwischen dem Stellgrößenbetrag und dem Abtastabstand D bekannt sein. Dieser Zusammenhang kann beispielsweise in einem Kalibrierprozess vor dem eigentlichen Messbetrieb erfasst und in Form einer Kalibrierkurve in einem geeigneten Speicher abgelegt werden.

In einer zweiten Variante der vorliegenden Erfindung erfolgt keine derartige Umsetzung des Stellgrößenbetrages auf Seiten der Positionsmesseinrichtung, vielmehr entspricht das übertragene digitale Signal dann dem Stellgrößenbetrag. Die Umsetzung in den entsprechenden Abtastabstand D kann dann vom jeweiligen Anwender vorgenommen werden, der hierzu die Ergebnisse des oben erwähnten Kalibrierprozesses nutzt. Ferner ist es in dieser Variante möglich, dass auf Seiten der Auswerteeinheit eine Umsetzung des übertragenen digitalen Signales in den zugehörigen Abtastabstand erfolgt. Desweiteren kann ggf. auch auf die Umsetzung des Strellgrößenbetrages in den Abtastabstand verzichtet werden, wenn etwa vom Hersteller der Positionsmesseinrichtung Justageanweisungen auf Basis der übertragenen Stellgrößenbeträge vorliegen.

Zur Übertragung des digitalen Signales wird die Stellgröße S in der Positionsmesseinrichtung 10 von der Regelungseinrichtung 19 auch an die schematisch angedeutete Umsetzeinrichtung 15 übertragen.

Der Umsetzeinrichtung 15 ist ferner die bereits oben erwähnte Übertragungseinrichtung 16 zugeordnet, die beispielsweise als bekannte synchron-serielle Schnittstelle ausgebildet ist. Über die Übertragungseinrichtung 16 und die Datenleitung 30.2 erfolgt dann schließlich u.a. die Übertragung des digitalen Signales an die nachgeordnete Folgeelektronik 20. Die Übertragung des digitalen Signales bzgl. des Stellgrößen-Betrages erfolgt hierbei innerhalb eines definierten Übertragungsprotokolles, wobei das jeweilige digitale Signal in einer vorgegebenen Bitbreite an die Folgeelektronik 20 übertragen wird. Neben der bidirektional betreibbaren Datenleitung 30.2 ist im vorliegenden Ausführungsbeispiel ferner eine Taktleitung 30.1 zur Synchronisation des Datentransfers zwischen der Übertragungseinrichtung 16 und der Folgeelektronik 20 angeordnet.

Die beschriebene Art und Weise der Übertragung des digitalen Signales bzgl. des Stellgrößen-Betrages an die Folgeelektronik 20 ist hierbei nicht erfindungswesentlich, d.h. es sind sehr wohl auch andere Übertragungsvarianten im Rahmen der vorliegenden Erfindung realisierbar, beispielsweise im Rahmen einer asynchronen, seriellen Datenübertragung etc..

Auf Seiten der Folgeelektronik 20, beispielsweise eine numerische Werkzeugmaschinensteuerung, ist u.a. eine Anzeigeeinrichtung 21 vorgesehen, die beispielsweise als übliches Display ausgebildet ist. Auf der Anzeigeeinrichtung 21 wird dabei neben vielfältigsten anderen Informationen auch das gerade übertragene digitale Signal angezeigt, entweder bereits umgesetzt in den Abtastabstand D oder aber als Stellgrößenbetrag. Zur Montage der Positionsmesseinrichtung kann etwa über die Anzeigeeinrichtung 21 dem Anwender eine geeignete Nutzeroberfläche angeboten werden, auf der u.a. auch die Information bzgl. des Stellgrößen-Betrages bzw. des Abtastabstandes D visualisiert wird.

Der jeweilige Anwender kann auf Grundlage des angezeigten digitalen Signales bzgl. des Stellgrößen-Betrages mit Hilfe der Justage-Elemente 13 dann bei der Montage der Positionsmesseinrichtung 10 den Abtast-Abstand D definiert einstellen. Vorteilhafterweise werden vom jeweiligen Hersteller der Positionsmesseinrichtung dem Anwender bestimmte Richtlinien bzgl. eines idealen Abtastabstandes D vorgegeben. Insbesondere kann dabei etwa vorgesehen sein, einen bestimmten Einbau-Toleranzbereich für die Größe des Abtastabstandes D vorzugeben, innerhalb dessen die Montage zu erfolgen hat. Um sicherzustellen, daß im eigentlichen Messbetrieb nicht bereits beim Überschreiten dieses Toleranzbereiches das komplette System ausfällt, erweist es sich als günstig, wenn die vorgegegebenen Grenzwerte des Einbau-Toleranzbereiches jeweils deutlich abweichend von den Grenzen des Funktionsfähigkeits-Bereiches gewählt werden. So wäre etwa denkbar, im Fall eines Funktionsfähigkeits-Bereiches von D = [0.2mm; 0.8mm] einen Einbau-Toleranzbereich von D = [0.45mm; 0.55mm] vorzugeben.

Auf der Anzeigeeinrichtung 21 kann das übertragene digitale Signal bzgl. des Stellgrößen-Betrages zur Unterstützung des Anwenders auf verschiedenste Art und Weise angezeigt bzw. visualisiert oder in sonstiger Weise zur Kenntniss gebracht werden werden. So ist es möglich, das entsprechende digitale Signal unmittelbar als alphanumerische Größe anzuzeigen. Ferner kann wie erwähnt auch vorgesehen sein, das digitale Signal in eine Größe umzuwandeln, die unmittelbar dem tatsächlichen Abtastabstand entspricht. Schließlich ist es aber auch möglich, das übertragene Signal bzgl. des Stellgrößen-Betrages in graphischer Form anzuzeigen, beispielsweise in Form einer geeigneten Balkendarstellung usw.. Je nach der gewählten der Anzeige muss seitens des Herstellers der Positionsmesseinrichtung dann selbstverständlich die Vorgabe der Grenzwerte eines Einbau-Toleranzbereiches erfolgen.

Im Rahmen der vorliegenden Erfindung existieren somit eine Reihe von Ausführungsmöglichkeiten, die je nach Anforderung realisiert werden können.

## Patentansprüche

1. Verfahren zum Betrieb einer Positionsmesseinrichtung, die eine Abtasteinheit und eine Messteilung umfasst, die im Messbetrieb relativ zueinander beweglich sind und bei der Abtastung positionsabhängige Ausgangssignale (A, B) erzeugt werden, wobei das Verfahren folgende Schritte umfaßt:
a) Regeln der Ausgangssignale (A, B) auf gleichbleibende Signalamplituden durch Einwirken auf eine Stellgröße (S),
b) Erfassen des zur Regelung erforderlichen Stellgrößen-Betrages,
c) Umsetzen des Stellgrößen-Betrages in ein zur seriellen Übertragung geeignetes digitales Signal,
d) Übertragung des digitalen Signales an eine der Positionsmesseinrichtung (10) nachgeordnete Folgeelektronik (20),
e) Anzeigen des übertragenen digitalen Signales, wobei entweder
f1) bei der Umsetzung des Stellgrößen-Betrages der Stellgrößen-Betrag in ein digitales Signal umgesetzt wird, das dem Abtastabstand (D) zwischen einer Abtastebene und einer Messteilungsebene entspricht oder
f2) wobei das übertragene digitale Signal dem Stellgrößen-Betrag entspricht und wobei
g) ein Abtastabstand (D) zwischen der Abtastebene und der Messteilungsebene mit Hilfe des angezeigten digitalen Signales eingestellt wird, das als Maß für den aktuellen Abtastabstand (D) zur Einstellung eines vorgegebenen, optimalen Abtastabstandes (D) dient.

2. Verfahren nach Anspruch 1, wobei zur Regelung der Ausgangssignale (A, B) auf eine gleichbleibende Signalamplitude die Bestromung mindestens einer Sendespule als Stellgröße (S) variiert wird.

3. Verfahren nach Anspruch 1, wobei zur Regelung der Ausgangssignale (A, B) auf eine gleichbleibende Signalamplitude die Verstärkung eines Verstärker-Elementes als Stellgröße (S) variiert wird.

4. Verfahren nach Anspruch 1, wobei zur Regelung der Ausgangssignale auf eine gleichbleibende Signalamplitude die Leuchtstärke einer Lichtquelle als Stellgröße variiert wird.

5. Verfahren nach Anspruch 1, wobei das jeweilige digitale Signal in einem seriellen Protokoll in einer vorgegebenen Bitbreite an die Folgeelektronik (20) übertragen wird.

6. Verfahren nach Anspruch 1, wobei das übertragene digitale Signal als alphanumerische Größe angezeigt wird.

7. Verfahren nach Anspruch 1, wobei das übertragene digitale Signal in graphischer Form angezeigt wird.

8. Verfahren nach Anspruch 1, wobei zur Einstellung des Abtastabstandes (D) Justage-Elemente (13) verwendet werden.

9. Verfahren nach Anspruch 1, wobei als Ist-Wert für die Regelung der Ausgangssignale (A, B) auf gleichbleibende Signalamplituden aus zwei periodischen Ausgangssignalen A = A₀ * sin xt, B = B₀ * cos xt die Größe R² = A² + B² gebildet wird.

## Claims

1. Method for operation of a position measuring device which comprises a scanning unit and a measuring division which are movable relative to each other during the measuring operation and position-dependent output signals (A, B) are produced during the scanning, the method comprising the following steps:
a) regulating the output signals (A, B) at constant signal amplitudes by acting on an adjustment variable (S),
b) detecting the adjustment variable amount required for regulation,
c) converting the adjustment variable amount into a digital signal which is suitable for serial transmission,
d) transmitting the digital signal to a sequential electronics unit (20) which is disposed subsequently to the position measuring device (10),
e) displaying the transmitted digital signal, wherein either
f1) the adjustment variable amount being converted during conversion of the adjustable variable amount into a digital signal which corresponds to the scanning distance (D) between a scanning plane and a measuring division plane or
f2) the transmitted digital signal corresponds to the adjustable variable amount and wherein
g) a scanning distance (D) between a scanning plane and a measuring division plane being adjusted with the help of the displayed digital signal which serves as a measure of the current scanning distance (D) for setting a prescribed, optimal scanning distance (D).

2. Method according to claim 1, the current supply of at least one transmitting coil being varied as adjustment variable (S) in order to regulate the output signals (A, B) at a constant signal amplitude.

3. Method according to claim 1, the amplification of an amplifier element being varied as adjustment variable (S) in order to regulate the output signals (A, B) at a constant signal amplitude.

4. Method according to claim 1, the luminosity of a light source being varied as adjustment variable in order to regulate the output signals at a constant signal amplitude.

5. Method according to claim 1, the respective digital signal being transmitted in a serial protocol in a prescribed bit width to the sequential electronics unit (20).

6. Method according to claim 1, the transmitted digital signal being displayed as an alphanumerical value.

7. Method according to claim 1, the transmitted digital signal being displayed in graphic form.

8. Method according to claim 1, adjustment elements (13) being used to adjust the scanning distance (D).

9. Method according to claim 1, the value R² = A² + B² being formed from two periodic output signals A = A₀ * sin xt, B = B₀ * cos xt as actual value for regulation of the output signals (A, B) at constant signal amplitudes.

## Revendications

1. Procédé d'utilisation d'un dispositif de mesure de position comportant une unité de palpage et une échelle de mesure qui peuvent être déplacées l'une par rapport à l'autre pendant le service de mesure et, lors de l'exploration, produisent des signaux de sortie (A, B) dépendant de la position, le procédé comprenant les étapes suivantes:
a) réglage des signaux de sortie (A, B) sur des amplitudes de signal constants, en agissant sur une grandeur réglante (S),
b) détermination de la valeur de grandeur réglante nécessaire au réglage,
c) conversion de la valeur de grandeur réglante en un signal numérique adapté à une transmission série,
d) transmission du signal numérique à une électronique de séquence (20) installée à la suite du dispositif de mesure de position (10),
e) représentation du signal numérique transmis et ou
f1) lors de la conversion de la valeur de grandeur réglante, cette valeur de grandeur réglante est convertie en un signal numérique qui correspond à la distance de palpage (D) entre un plan de palpage et un plan d'échelle de mesure ou alors
f2) le signal numérique transmis correspond à la valeur de grandeur réglante et
g) une distance de palpage (D) entre un plan de palpage et un plan d'échelle de mesure est réglée à l'aide du signal numérique représenté qui sert de mesure pour la distance de palpage (D) actuelle, aux fins de régler une distance de palpage (D) optimale prédéterminée.

2. Procédé selon la revendication 1, selon lequel on fait varier l'alimentation en courant d'au moins une bobine émettrice, en tant que grandeur réglante (S), pour régler les signaux de sortie (A, B) sur une amplitude de signal constante.

3. Procédé selon la revendication 1, selon lequel on fait varier l'amplification d'un élément amplificateur, en tant que grandeur réglante (S), pour régler les signaux de sortie (A, B) sur une amplitude de signal constante.

4. Procédé selon la revendication 1, selon lequel on fait varier la luminosité d'une source lumineuse, en tant que grandeur réglante, pour régler les signaux de sortie sur une amplitude de signal constante.

5. Procédé selon la revendication 1, selon lequel le signal numérique respectif est transmis dans un protocole série, avec une largeur en bits prédéterminée, à l'électronique de séquence (20).

6. Procédé selon la revendication 1, selon lequel le signal numérique est représenté sous forme de grandeur alphanumérique.

7. Procédé selon la revendication 1, selon lequel le signal numérique transmis est représenté sous une forme graphique.

8. Procédé selon la revendication 1, selon lequel on utilise des éléments d'ajustage (13) pour régler la distance de palpage (D).

9. Procédé selon la revendication 1, selon lequel on forme, en tant que valeur effective pour le réglage des signaux de sortie (A, B) sur des amplitudes de signal constantes, la grandeur R² = A² + B² à partir de deux signaux de sortie périodiques A = A₀ * sin xt, B = B₀ * cos xt.
